# EUROPÄISCHE PATENTSCHRIFT

(11) **EP 1 636 012 B1**
(45) Veröffentlichungstag und Bekanntmachung des Hinweises auf die Patenterteilung: **04.04.2007**
(21) Anmeldenummer: 04739740.1
(22) Anmeldetag: 09.06.2004
(51) Int. Cl.: B29C 47/68, B01D 29/60, B01D 29/96, B01D 35/143

(54) **VERFAHREN UND VORRICHTUNG ZUR BEREITSTELLUNG EINER SCHMELZE**
METHOD AND DEVICE FOR PROVIDING A MELT
PROCÉDÉ ET DISPOSITIF D'OBTENTION D'UNE MASSE EN FUSION

(30) Priorität: 10.06.2003 DE 10326487
(43) Veröffentlichungstag der Anmeldung: 22.03.2006
(73) Patentinhaber: GNEUSS KUNSTSTOFFTECHNIK GmbH, D-32549 Bad Oeynhausen (DE)
(72) Erfinder: GNEUSS, Detlef, 32549 Bad Oeynhausen (DE)
(74) Vertreter: Grosse, Wolf-Dietrich Rüdiger
(86) Internationale Anmeldenummer: PCT/EP2004/006234
(87) Internationale Veröffentlichungsnummer: WO 2004/108393

(56) Entgegenhaltungen:
- EP-A- 0 492 425
- EP-A- 1 208 956
- WO-A-01/43847
- DE-A- 10 150 796
- DE-U- 9 004 535
- US-A- 4 832 882
- US-A- 4 944 903

## Beschreibung

Die Erfindung betrifft ein Verfahren zur Bereitstellung einer Schmelze nach dem Oberbegriff des Anspruchs 1 sowie eine Vorrichtung zur Durchführung des Verfahrens nach dem Oberbegriff des Anspruchs 7.

Derartige Verfahren bzw. Vorrichtungen dienen dazu, beispielsweise in Extrudern verwendete Kunststoffschmelzen mechanisch von Verunreinigungen zu befreien, um sie dann weiterverarbeiten zu können. Hierfür weist eine solche Vorrichtung etwa eine Reinigungseinheit mit einer metallischen Siebscheibe auf, die mit mehreren Siebeinsätzen, die über den Umfang aufeinander folgen, versehen ist. Die Siebeinsätze werden nach einer gewissen Funktionszeit einer Eigenreinigung ausgesetzt, um Verschmutzungen, welche die Lochkanäle zusetzen, zu entfernen. Ohne die Reinigung würde schnell ein erheblicher Gegendruck durch zugesetzte Siebbereiche entstehen, der die reinigende Funktion der Siebe für die Schmelze stören würde.

Die EP 1 208 956 A1 offenbart ein Verfahren sowie eine Vorrichtung zum Konstant halten eines Fördenmedium- Durchsatzes am Ausgang eines Extrusionssystems. Dazu wird druckabhängig die Drehzahl einer Zuführvorrichtung und/oder die Drehzahl der einem Filter nachgeordneten Fördervorrichtung beeinflusst. Eine weitergehende Beeinflussung des Prozesses ist nicht vorgesehen.

Aus der WO 01/43 847 ist bekannt, zur Eigenreinigung die Siebeinsätze mit einem Reinigungsstrom zu beaufschlagen, weicher der Durchtrittsrichtung des Schmelzestroms durch die Siebscheiben entgegengesetzt ist. Dieser Gegenstrom wird in einem von dem Hauptschmebekanal abgezweigten Rückspülkanal erzeugt. Um in Abhängigkeit vom Verschmutzungsgrad die Eigenreinigung der Siebeinsätze zu optimieren, wird dort eine Steuervorrichtung vorgeschlagen, die das Schmelzevolumen und/oder die Fließgeschwindigkeit der rückspülenden Schmelze bestimmt und deren Eingangsgrößen von während des Betriebes ermittelten Prozessparametern gebildet sind. Eine derartige Vorrichtung kann jedoch auf wechselnde Qualität der zugeführten Komponenten nur mit angepasster Reinigtingsleistung der Siebeinsätze reagieren, so dass unter Umständen, etwa bei verklumptem Ruß, der zugeführt wird, zwar die Siebeinsätze ihre Funktion erfüllen, jedoch die Ausgangszusammensetzung der Schmelze nicht den gewünschten Anforderungen entspricht

Der Erfindung liegt die Aufgabe zugrunde, Verfahren bzw. eine Vorrichtung der genannten Art hinsichtlich ihrer Einsatzmöglichkeiten zu verbessern.

Die Erfindung löst diese Aufgabe durch ein Verfahren mit den Merkmalen des Anspruchs 1 sowie durch eine Vorrichtung mit den Merkmalen des Anspruchs 7. Hinsichtlich vorteilhafter Ausgestaltungen wird auf die weiteren Ansprüche 2 bis 6 und 8 verwiesen.

Erfindungsgemäß ist verfahrensmäßig nach Anspruch 1 die Möglichkeit eröffnet, aufgrund gemessener Parameter und ggf. daraus ermittelter filterspezifischer Prozeßdaten mit einer Änderung der zugeführten Prozeßmaterialien und/oder Prozeßmaterialienzusammensetzung und nach Anspruch 2 deren Verarbeitungsparameter reagieren zu können und somit eine gleichmäßige Qualität des Produkts auf der Ausgangsseite sicherzustellen.

Nach Anspruch 3 kann andererseits auch bei nicht völlig gleichbleibenden Produkteigenschaften die Weiterverarbeitung angepaßt werden, etwa dadurch, dass in der Vorrichtung oder einer nachgeschalteten Weiterverarbeitungseinheit bei größer werdender Viskosität der Schmelze flexible Rohrquerschnitte erweitert oder Ventilöffnungszeiten verlängert werden, um die Fließgeschwindigkeit der dann zäher werdenden Schmelze und somit die Prozessführung konstant halten zu können.

Besonders vorteilhaft beeinflußt die Regelung aufgrund der von der Sensoreinheit ermittelten Daten die Arbeit der Reinigungseinheit und die Regelung der Zusammensetzung der zugeführten Komponenten in wechselseitiger Abhängigkeit. Damit ist es beispielsweise möglich, wenn die Sensoreinheit einen zu geringen Ruß anteil - und somit eine zu geringe Schwarzfärbung - in der Schmelze detektiert, sowohl die Eigenreinigung des Siebfilters zu erhöhen, weil Verklumpungen auf der Filtereingangsseite vorliegen können, als auch bei den zugeführten Komponenten den Rußanteil zu erhöhen, weil offensichtlich eine zu große Rußmenge im Siebfilter hängenbleibt und somit für das Produkt nicht zur Verfügung steht. Somit kann auch unterschiedlichen Qualitäten der zugefügten Komponenten Rechnung getragen werden.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: ein schematisches Blockschaltbild einer erfindungsgemäßen Vorrichtung,
- Fig. 2: eine ähnliche Ansicht wie Fig. 1 einer herkömmlichen Vorrichtung zur Bereitstellung einer Schmelze,
- Fig. 3: eine Schnittansicht des mit der Reinigungseinheit versehenen Abschnitts der Vorrichtung,
- Fig. 4: einen Schnitt entlang der Linie IV-IV in Fig. 3.

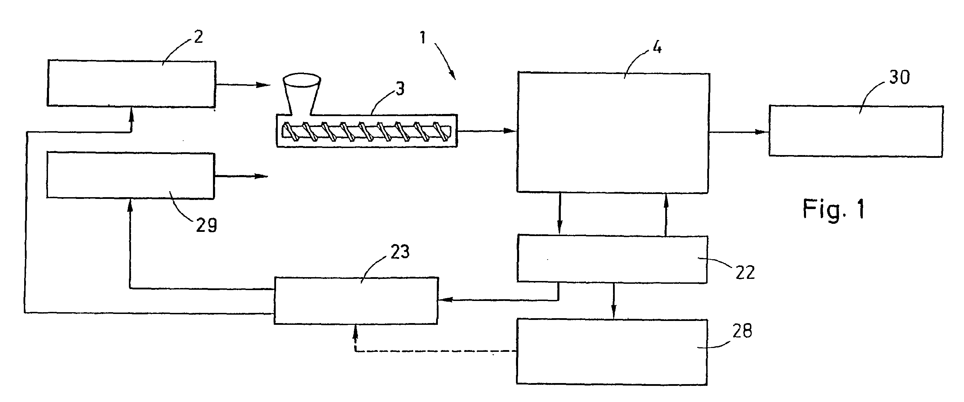

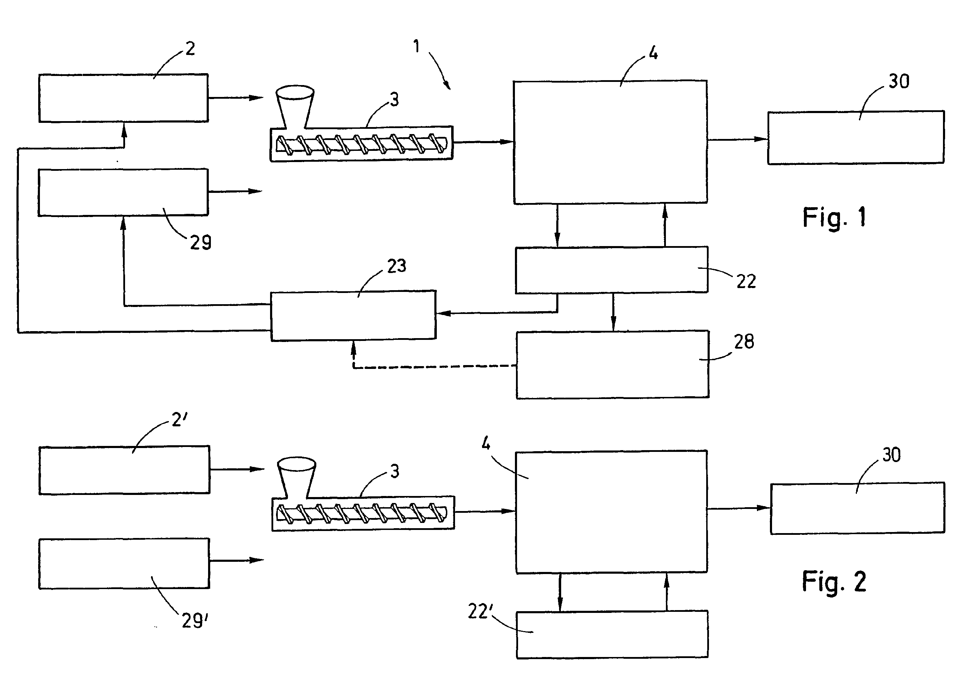

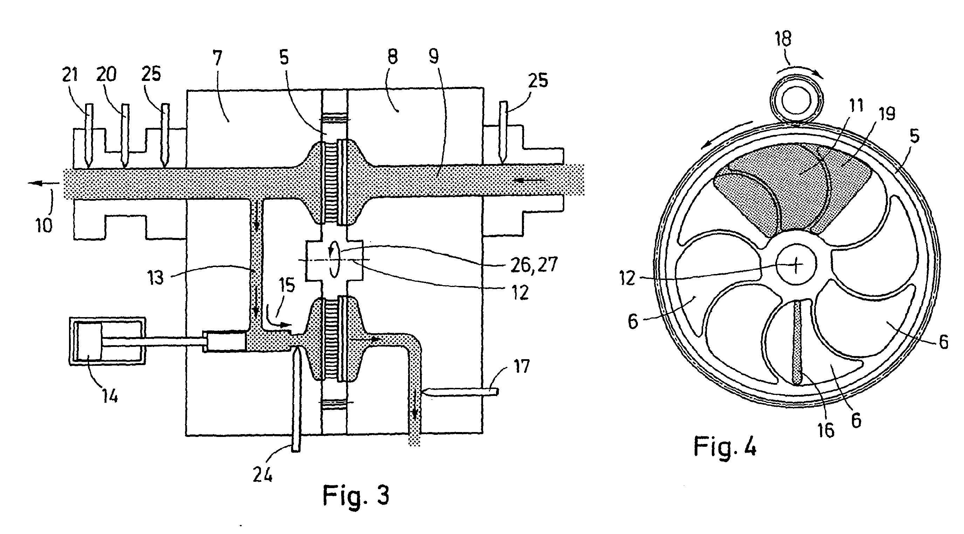

In Fig. 1 ist schaubildlich und nach Art eines Blockschaltbilds eine Vorrichtung 1 dargestellt, welche die Merkmale sowohl des Anspruchs 1 als auch des Anspruchs 2 verwirklicht. Die Vorrichtung 1 umfasst eine Zuführung 2 für einen Input von verschiedenen Komponenten, etwa einem frischen Granulat, einem Recyclat, Masterbatchs oder Zuschlagstoffen wie z.B. Kreide, Holzmehl, Farbe usw. Die Komponenten werden über eine geeignete Plastifiziereinheit 3, hier als Trichter mit Förderschnecke dargestellt, zumindest einer Reinigungseinheit 4 zugeleitet. Diese kann, wie hier dargestellt, eine Siebscheibe 5 umfassen, die mit mehreren Siebeinsätzen 6 versehen ist. Typisch sind etwa zehn bis vierzehn Siebeinsätze 6, die auswechselbar sein können. In Reinigungsstellung ist die Siebscheibe 5 zwischen zwei parallelen Plattenkörpern 7, 8 innerhalb eines Reinigungskanals 9 gehalten, wobei in Flußrichtung 10 eines Reinigungsfluids (Fig. 3) eine Beaufschlagungsöffnung 11 für die Beaufschlagung der Siebscheibe 5 vorgesehen ist.

Im Ausführungsbeispiel hat die Siebscheibe 5 eine kreisrunde Umrissgestalt (Fig. 4), und die Beaufschlagungsöffnung 11 weist zumindest eine erhebliche Erstrekkung in radialer Richtung der Siebscheibe 5 auf und reicht bis zu ihrem äußeren Rand. Die Siebscheibe 5 ist um eine zentrale Achse 12 drehbar, so dass die Siebeinsätze 6 nacheinander in den von der Beaufschlagungsöffnung 11 überstrichenen Bereich gelangen können.

Von dem Schmelzekanal 9 zweigt eine Rückspülleitung 13 ab, in der durch den Siebfilter 5 hindurchgetretene Schmelze mittels eines Schmelzeschusskolbens 14 in zur Flußrichtung 10 gegenläufiger Richtung 15 durch einen schlitzartigen Teilbereich 16 des Schmelzefilters 5 gepresst werden kann, um dadurch zugesetzte Löcher von Siebeinsätzen 6 zu reinigen. Somit kann der Schmelzefilter 5 während des Betriebes gleichzeitig auch seine Eigenreinigung betreiben und beispielsweise durch kontinuierliche oder getaktete Drehung um die Achse 12 jeweils teilweise in Eigenreinigungs- und teilweise in Filterstellung für die Schmelze stehen. Solche Bereiche, die sich in Filterstellung zumindest teilweise zugesetzt haben, können dann direkt der Reinigungsstellung zugeführt werden.

Die Vorrichtung 1 umfasst weiterhin mehrere Sensoreinheiten 17, 18 ,19, 20, 21, über die unterschiedliche Parameter erfasst werden, welche nicht nur zur Regelung der Funktion der Filtereinheit sondern auch zu Beeinflussung der Effektivität und der Qualität der Vorrichtung 1 herangezogen werden.

Die Sensoreinheit 17 ist am Reinigungskanal 9 angeordnet und misst die durch die Rückspülung aus dem Siebfilter 5 ausgeschiedene Schmutzmenge. Die Sensoreinheiten 18 und 19 sind dem Siebfilter 5 zugeordnet und messen das für seine Drehung um die Achse 12 erforderliche Antriebsmoment bzw. den Siebflächenverbrauch oder die erforderliche Filterflächenkapazität während der Reinigung der Schmelze. Mit den Sensoreinheiten 20 und 21 werden noch die Viskosität der gereinigten Schmelze und die Wertung der Schmelzereinheit ermittelt. Weitere Meßgrößen, etwa Temperatur, Druck, elektrische Leitfähigkeit der Schmelze u. a. können alternativ oder zusätzlich ermittelt werden.

Die von den Sensoreinheiten ermittelten, und ggf. daraus über Rechenmodelle errechneten Daten werden zunächst wie im Stand der Technik (Fig. 2) an eine Filtersteuerung 22 übermittelt, mit deren Hilfe die Bewegung des Siebfilters 5 einstellbar ist. Des weiteren werden die Daten jedoch erfindungsgemäß an eine Prozesssteuerungseinheit 23 übergeben, die zwei Funktionen erfüllt: Zum einen regelt sie mit den gewonnenen Daten die Zusammensetzung der Komponenten im Materialinput, etwa derart, dass sie bei einem zu hohen Anteil einer Komponente in der Schmelze, etwa erkannt durch eine zu hohe Dichte oder fehlerhafte elektrische Leitfähigkeit, die Zuführung dieser Komponente verringert; zum anderen regelt die Prozesssteuerungseinheit 23 Verfahrensparameter 29 wie z.B. die Viskosität für die Vorrichtung 1 selber, wie hier dargestellt, und/oder für zumindest eine der Vorrichtung 1 nachgeschaltete Weiterverarbeitungseinheit, wie z.B. für einen Häcksler, ein Ventil, einen Extruder o.ä. Zugeführte Komponenten können sowohl Recyclate als auch frische Materialien als auch eine Mischung sein, die zudem mit verschiedenen Füllstoffen angereichert sein kann.

Insbesondere werden die Steuerungsbefehle für den Materialinput und die Filtersteuerung in wechselseitiger Abstimmung herausgegeben: Wenn zum Beispiel minderwertiger Ruß als zugeführte Komponente verwendet wird, der agglomeriert oder klumpt, bleiben diese Rußklumpen im Siebfilter 5 hängen und tragen nicht, wie gewünscht, zur Schwarzfärbung des Endprodukts bei. Der Siebfilter 5 verstopft daher schneller, und die Filtersteuerung 22 gibt somit den Befehl, die Eigenreinigung des Filters 5, also die Drehung um die Achse 12, zu beschleunigen. Gleichzeitig würde jedoch etwa durch dem Siebfilter 5 nachgeschaltete Sensoreinheiten 20, 21 die Fehlerhaftigkeit des Produkts an sich - hier zu geringe Schwarzfärbung - erkannt und von der Prozesssteuerungseinheit 23 somit die Information an den Materialinput herausgegeben, den Anteil der Rußkomponente zu erhöhen.

Dabei sind Grenzwerte in die Regelung eingebaut, die zum Beispiel eine zu hohe Drehgeschwindigkeit des Siebfilters 5 oder eine zu hohe Dosierung einzelner Komponenten verhindern. Ggf. wird ein Alarm ausgelöst oder die Anlage automatisch abgeschaltet.

Neben den Sensoren 17, 18, 19, 20, 21 sind auch verschiedene Regelglieder 24, 25, 26, 27 vorgesehen, die eine Regelung von Verfahrensparametern der Vorrichtung 1 ermöglichen, die im Betrieb eine Anpassung an detektierte Veränderungen ermöglicht. Etwa kann durch den als Ventil ausgebildeten Aktor 24 der Rückspuldruck eingestellt werden und durch den Aktor 25 die Druckdifferenz über die Siebscheibe 5. Die der Drehachse 12 zugeordneten Aktoren 26, 27 sorgen für eine Einhaltung von Grenzwerten für die Schmelzeverweilzeit am Siebfilter 5 und für eine Einhaltung von Grenzwerten für die Schmutzkuchenverweilzeit am Siebfilter 5.

Es versteht sich, dass verschiedene Möglichkeiten der Beeinflussung des Prozesses durch die Prozesssteuerungseinheit 23 und zugehörige Aktoren eingestellt werden können.

Insgesamt kann damit der Prozess sich erstmals als Ganzes - und nicht nur die Parameter der Filtereinheit - selbst vollautomatisch regeln. Ein manueller Eingriff ist dabei nicht mehr erforderlich.

Der Vorteil liegt darin, daß man den Filter immer maximal nutzen kann, in dem die Dosierung der zuzuführenden Komponenten als auch die Verfahrensparameter automatisch optimal angepasst werden.

Die von der oder den Sensoreinheit(en) 17, 18, 19, 20, 21 ermittelten Daten können zudem bei Hinweis auf etwa Qualitätsmängel in den zugeführten Komponenten als automatisierte Informationen nicht nur den Prozeß selbst beeinflussen, sondern auch gleichzeitig oder zeitversetzt an das Qualitätsmanagement 28 und/oder den Einkauf geliefert werden, um somit bei der nächsten Lieferung der entsprechenden Komponente eine Verbesserung zu erreichen.

Es besteht aber auch die Möglichkeit, das Finalprodukt 30 entsprechend zu klassifizieren und zuzuordnen.

Die Erfassung all dieser wesentlichen Daten stellt die konsequente Weiterverwertung der Prozessdaten dar, die sich aus dem filterspezifischen Kontrollsystem ergeben und die nunmehr zusätzlich eine umfassende und vor allem vollautomatische Prozeßsteuerung des gesamten Produktionsprozesses ermöglichen.

Voraussetzung für eine solch komplexe Steuerung ist ein Filter, wie er z.B. durch die WO 01/43 847 zum Stand der Technik gehört, bei dem das Schmutzkuchenprofil im Schmelzkanal zeitlich konstant ist und der Filter somit ein nahezu analoges Signal für die benötigte Filterfläche pro Zeiteinheit liefert.

Bei anderen Filtriersystemen kann man dies auch rein theoretisch aus dem Druckanstieg pro Zeiteinheit ableiten, dieser ist jedoch nicht linear mit der Schmutzmenge verknüpfbar, so daß eine solche Berechnung theoretisch sehr kompliziert, und daher in der Praxis nicht umsetzbar ist. Bei Rückspülfitern ist dies zudem überhaupt nicht umsetzbar, da die rückgespülten Siebe immer einen undefinierten und auch nicht kontrollierbaren Zustand haben.

### Bezugszeichenliste

- 1.: Vorrichtung,
- 2.: Zuführung,
- 3.: Plastifiziereinheit,
- 4.: Reinigungseinheit,
- 5.: Siebscheibe,
- 6.: Siebeinsatz,
- 7.: Plattenkörper,
- 8.: Plattenkörper,
- 9.: Reinigungskanal,
- 10.: Flussrichtung,
- 11.: Beaufschlagungsöffnung,
- 12.: Achse,
- 13.: Rückspülleitung,
- 14.: Schmelzeschusskolben,
- 15.: gegenläufige Richtung,
- 16.: Teilbereich,
- 17.: Sensoreinheit,
- 18.: Sensoreinheit,
- 19.: Sensoreinheit,
- 20.: Sensoreinheit,
- 21.: Sensoreinheit,
- 22.: Filtersteuerung,
- 23.: Prozesssteuerungseinheit,
- 24.: Aktor,
- 25.: Aktor,
- 26.: Aktor,
- 27.: Aktor,
- 28.: Qualitätsmanagement
- 29.: Verfahrensparameter
- 30.: Finalprodukt

## Patentansprüche

1. Verfahren zur Bereitstellung einer Schmelze, insbesondere einer Kunststoffschmelze, mit einer Vorrichtung (2) zum Zuführen von Stoffkomponenten zu einer Einheit (3) zum Plastifizieren der Stoffkomponenten, wobei zumindest eine Einheit (4) zum Reinigen für die durchlaufende Schmelze, insbesondere eine drehbare Siebscheibe (5), und zumindest eine Sensoreinheit (17;18;19;20;21) zum Erfassen von einem oder mehreren Prozessparametem vorgesehen ist, mit deren Hilfe und in Kenntnis der filterspezifischen Prozeßdaten die Arbeit der Reinigungseinheit (4) beeinflußbar ist,
**dadurch gekenrizeichnet,**
dass aufgrund ermittelter (17;18;19;20;21) Prozessparameter undloder der filterspezifischen Prozeßdaten die über die Zuführvonichtung (2) zugeführten Prozeßmaterialien zumindest in Art und Dosierung geregelt werden.

2. Verfahren nach Anspruch 1,
**dadurch gekennzeichnet,**
**dass** aufgrund der ermittelten (17;18;19;20;21).Prozessparameter und/oder der filterspezifischen Prozeßdaten die Verarbeitungsparameter der Prozeßmaterialien geregelt werden.

3. Verfahren nach Anspruch 1 oder 2,
**dadurch gekennzeichnet,**
**dass** aufgrund ermittelter (17;18;19;20;21) Prozessparameter und/oder der filterspezifischen Prozeßdaten die Verfahrensparameter einer der Reinigungseinheit (4) nachgeschalteten Weiterverarbeitungseinheit, insbesondere eines Häckster, eines Ventils einer Kunststoffverarbeitungsmaschine oder dergleichen geregelt werden.

4. Verfahren nach einem der Ansprüche 1 bis 3,
**dadurch gekennzeichnet,**
**dass** die Regelung der Reinigungseinheit (4) und der Zuführungsvorrichtung (2) aufgrund der Daten in wechselseitiger Abhängigkeit erfolgt.

5. Verfahren nach Anspruch 3 oder 4,
**dadurch gekennzeichnet,**
**dass** die Regelung der Reinigungseinheit (4) und der Verfahrensparameter aufgrund der Daten in wechselseitiger Abhängigkeit erfolgt.

6. Verfahren nach einem der Ansprüche 1 bis 5,
**dadurch gekennzeichnet,**
**dass** aufgrund der ermittelte Prozessparameter und/oder der füterspezifischen Prozeßdaten. Informationen an das QualItätsmanagement (28) und/oder den Einkauf generiert werden.

7. Vorrichtung (1) zur Durchführung des Verfahrens nach einem der Ansprüche 1 bis 6, mit einer Zuführvorrichtung (2) für Stoffkomponenten die mit einer Plastifiziereinheit (3) verbunden ist, wobei die Vorrichtung (1) zumindest eine Reinigungseinheit (4) für die durchlaufende Schmelze, insbesondere eine drehbare Siebscheibe (5), und zumindest eine Sensoreinheit (17;18;19;20;21) zur Erfassung von einem oder mehreren Prozessparametern aufweist, mit deren Hilfe und in Kenntnis der filterspezifischen Prozeßdaten die Arbeit der Reinigungseinheit (4) beeinflußbar ist,
**dadurch gekennzeichnet,**
**dass** eine Prozesssteuerungseinheit (23) vorgesehen ist, welche aufgrund ermittelter (17;18;19;20;21) Prozessparameter und/oder der filterspezifischen Prozeßdaten die Zuführvorrichtung (2) zumindest bezüglich der Art und Dosierung der zugeführten Prozeßmaterialien regelt.

8. Vorrichtung (1) nach Anspruch 7,
**dadurch gekennzeichnet,**
**dass** die Prozesssteuerungseinhelt (23) aufgrund ermittelter (17;18;19;20;21) Prozessparameter und/oder der filterspezifischen Prozeßdaten die Verfahrensparameter (29) einer der Reinigungseinheit (4) nachgeschalteten Weiterverarbeitungseinheit, insbesondere eines Häcksler, eines Ventils einer Kunststofrverarbeitungsmaschine oder dergleichen regelt.

## Claims

1. A method for supplying a melt, in particular a plastic melt, with a device (2) for feeding material components to a unit (3) for plasticising the material components, wherein at least one unit (4) is provided for cleaning for the melt passing through, in particular a rotary screen disc (5), and at least one sensor unit (17; 18; 19; 20; 21) for recording one or a plurality of process parameters, by means of which, and knowing the filter-specific process data, the work of the cleaning unit (4) can be influenced, **characterised in that** the process materials supplied by means of the feed device (2) are controlled at least in terms of type and dosing on the basis of determined (17; 18; 19; 20; 21) process parameters and/or the filter-specific process data.

2. The method according to Claim 1, **characterised in that** the processing parameters of the process materials are controlled on the basis of the determined (17; 18; 19; 20; 21) process parameters and/or the filter-specific process data.

3. The method according to Claim 1 or 2, **characterised in that** the process parameters of a further processing unit connected in series to the cleaning unit (4), particularly a chopper, a valve of a plastic processing machine or the like, are controlled on the basis of determined (17; 18; 19; 20; 21) process parameters and/or the filter-specific process data.

4. The method according to one of Claims 1 to 3, **characterised in that** the cleaning unit (4) and the feed device (2) are controlled on the basis of the data in a mutually dependent manner.

5. The method according to Claim 3 or 4, **characterised in that** the cleaning unit (4) and the process parameters are controlled on the basis of the data in a mutually dependent manner.

6. The method according to one of Claims 1 to 5, **characterised in that** information on the quality management (28) and/or the purchase is generated on the basis of the determined process parameters and/or the filter-specific process data.

7. A device (1) for implementing the method according to one of Claims 1 to 6, with a feed device (2) for material components, which device is connected to a plasticising unit (3), wherein the device (1) has at least one cleaning unit (4) for the melt passing through, in particular a rotary screen disc (5), and at least one sensor unit (17; 18; 19; 20; 21) for recording one or a plurality of process parameters by means of which, and knowing the filter-specific process data, the work of the cleaning unit (4) can be influenced, **characterised in that** a process control unit (23) is provided which controls the feed device (2), at least in terms of type and dosing of the process materials supplied, on the basis of determined (17; 18; 19; 20; 21) process parameters and/or the filter-specific process data.

8. The device (1) according to Claim 7, **characterised in that** the process control unit (23) controls the process parameters (29) of a further processing unit connected in series to the cleaning unit (4), particularly a chopper, a valve of a plastic processing machine or the like, on the basis of determined (17; 18; 19; 20; 21) process parameters and/or the filter-specific process data.

## Revendications

1. Procédé de mise à disposition d'une masse fondue, notamment d'une masse de matière plastique fondue, avec un dispositif (2) pour l'alimentation de composants de substances vers une unité (3) destinée à la plastification des composants de substances, au moins une unité (4) notamment un disque tamis rotatif (5), étant prévue pour la purification de la masse fondue traversante, et au moins une unité de capteurs (17 ; 18 ; 19 ; 20 ; 21) étant prévue pour la détection d'un ou de plusieurs paramètres du procédé, à l'aide desquels et en connaissance des données de filtration spécifiques du procédé, le fonctionnement de l'unité de purification (4) peut être influencé,
**caractérisé en ce que** sur la base des paramètres de procédé détectés (17 ; 18 ; 19 ; 20 ; 21) et/ou des données de filtration spécifiques du procédé, on règle les matières du procédé alimentées par l'intermédiaire du dispositif d'alimentation au moins au niveau de leur nature et de leur dosage.

2. Procédé selon la revendication 1,
**caractérisé en ce que** sur la base des paramètres de procédé détectés (17 ; 18 ; 19 ; 20 ; 21) et/ou des données de filtration spécifiques du procédé, on règle les paramètres de mise en oeuvre des matières du procédé.

3. Procédé selon la revendication 1 ou 2,
**caractérisé en ce que** sur la base des paramètres de procédé détectés (17 ; 18 ; 19 ; 20 ; 21) et/ou des données de filtration spécifiques du procédé, on règle les paramètres du procédé d'une unité de mise en oeuvre ultérieure, montée en aval de l'unité de purification (4), notamment d'une hacheuse, d'une soupape d'une machine de mise en oeuvre de matière plastique ou similaire.

4. Procédé selon l'une quelconque des revendications 1 à 3,
**caractérisé en ce que** le réglage de l'unité de purification (4) et du dispositif d'alimentation (2) est assuré en dépendance réciproque, sur la base des données.

5. Procédé selon la revendication 3 ou 4
**caractérisé en ce que** le réglage de l'unité de purification (4) et des paramètres du procédé est assuré en dépendance réciproque, sur la base des données.

6. Procédé selon l'une quelconque des revendications 1 à 5,
**caractérisé en ce que** sur la base des paramètres de procédé détectés et/ou des données de filtration spécifiques du procédé, on génère des informations à l'attention de la gestion qualité (28) et/ou des achats.

7. Dispositif (1) pour réaliser le procédé selon l'une quelconque des revendications 1 à 6, avec un dispositif d'alimentation (2) pour des composants de substances, qui est reliée avec une unité de plastification (3), le dispositif (1) comportant au moins une unité de purification (4) pour la masse fondue traversante, notamment un disque tamis rotatif (5) et au moins une unité de capteurs (17 ; 18 ; 19 ; 20 ; 21), pour la détection d'un ou de plusieurs paramètres du procédé, à l'aide desquels et en connaissance des données de filtration spécifiques du procédé, le fonctionnement de l'unité de purification (4) peut être influencé,
**caractérisé en ce qu'**est prévue une unité de commande du procédé (23), qui sur la base de paramètres de procédé détectés (17 ; 18 ; 19 ; 20 ; 21) et/ou des données de filtration spécifiques du procédé, règle le dispositif d'alimentation (2), au moins au niveau de la nature et du dosage des matières de procédé alimentées.

8. Dispositif (1) selon la revendication 7,
**caractérisé en ce que** sur la base de paramètres de procédé détectés (17 ; 18 ; 19 ; 20 ; 21) et/ou des données de filtration spécifiques du procédé, l'unité de commande du procédé (23) règle une unité de mise en oeuvre ultérieure, montée en aval de l'unité de purification (4), notamment une hacheuse, une soupape d'une machine de mise en oeuvre de matière plastique ou similaire.
